# EUROPEAN PATENT APPLICATION

(11) **EP 2 106 767 A1**
(43) Date of publication of application: **07.10.2009**
(21) Application number: 08006488.4
(22) Date of filing: 31.03.2008
(51) Int. Cl.: A61C 8/00

(54) **Two-part dental implant**

(71) Applicant: Ziterion GmbH, 97215 Uffenheim (DE)
(72) Inventor: The designation of the inventor has not yet been filed
(74) Representative: Zwicker, Jörk

(57) **Abstract**

The present invention relates to the field of dentistry. In particular, the invention relates to a two-part dental implant, in particular to an anchoring part and an abutment of a two-part dental implant. The invention further relates to an inserting pole for inserting an anchoring part into a bone.

## Description

### FIELD OF THE INVENTION

The invention relates to the field of dentistry. In particular, the invention relates to a two-part dental implant, in particular to an anchoring part and an abutment of a two-part dental implant. The invention further relates to an inserting pole for inserting an anchoring part into a bone.

### BACKGROUND OF THE INVENTION AND STATE OF THE ART

In the last decades artificial bone structures have increasingly been used for implantation in order to replace natural bones lost due to, e.g. degeneration, degradation or injury. These implantations have been performed on bones and tooth roots and have afforded good results in the remedy of defects or the recovery of functions thereof. Dental implants are commonly used to support fixed or removable prosthesis of patients when a patient's natural roots have been lost. Therefore, it is essential to provide an adequate foundation onto which a dentist can rebuild a dentition. As more people want to take advantage of more conservative approaches offered by implant dentistry, e.g. using a single implant rather than cutting down adjacent teeth to support a short span bridge to replace a missing tooth, implant dentistry has gained more and more popularity.

For dental implants it is important to be made of a non-corrosive material, which must be compatible with the surrounding tissue and which does not provoke any immunologic reactions. Usually selected metals and/or selected ceramic materials are used for implants. As metallic materials which have mainly been used for preparation of artificial bones or tooth roots, cobalt-chromium alloys, stainless steel, titanium and tantalum are exemplified. On the other hand, as ceramic materials, alumina or materials comprising mainly carbon have recently been employed.

Metallic materials are excellent in mechanical strength, particularly in impact strength; however, they do lack affinity for living tissue. When a metallic implant is used, metal ions are dissolved out of the implant and may be toxic to the bone cells around the implant. In addition, bone formation is abstracted, probably because of the larger thermal conductivity of the metallic implant if compared to a normal root. Among the metallic materials titanium, which is passivated with a thin, inert titanium oxide layer and tantalum have proven to have superior corrosion resistance and hence have been employed as fixed plates for sculls of fractured parts of bones and implants of jawbones.

Ceramic materials on the other hand show a good affinity to bones. Growing bone tissue, in particular osteoblasts can penetrate into fine pores of the ceramic materials, leading to a strong fixation. In addition, there are no adverse reactions between the ceramic material and the tissue. Further, since they are resistant to corrosion or decomposition ceramic materials have excellent durability. However, most ceramic materials possess poor impact strength, and are difficult and expensive to manufacture.

A dental implant usually comprises an implant part, intended to be implanted in the bony tissue of the mandible or of the maxilla, and a post or abutment piece, which can be transfixed onto the implant body, so that it stands up above the implant body in order to be able to accept a dental prosthesis. A so-called one-part dental implant comprises the implant part and the abutment part in one piece, in contrast, a two-part dental implant, as the name implies, is made of two pieces, thus the implant part is separable from the abutment part and is connected to the abutment part through, for example, a screw.

Although the two-part design is more difficult to manufacture, it has the advantage over the one-part design that the implant can be inserted into the bone and that the gingival tissue can be closed over the implant to allow undisturbed ingrowth of bone tissue and implantation into the bone over a course of several months, typically 3 to 6 months. In a second phase the abutment part is attached to the implant part and a crown or superstructure is attached to the abutment part.

WO 03/045368 A1 discloses a one-part dental implant comprising an anchor part for anchoring the implant in the bone and a mounting part for receiving a prosthetic superstructure. The anchor part and the mounting part are configured in one piece from zirconium oxide-based material. At least sections of the external surface of at least the anchor part are pre-treated using a subtractive removal method or are provided with a coating which supports ossification.

WO 2004/096075 A1 describes a one-part dental implant comprising a base body with a threaded section and a pin for mounting a dental crown, wherein the body base is in one piece. In addition, this one-piece base body is at least largely made from zirconium oxide or a mixture of zirconium oxide and aluminium.

EP 1 570 804 A1 describes a two-part dental implant, which comprises an outer body made of ceramic or metal and an inner body made of metal or ceramic, provided that when the outer body is made of metal the inner body is made of ceramic and when the outer body is made of ceramic the inner body is made of metal.

WO 2005/044133 discloses a two-part dental implant, which consists of a base body comprising a threaded part and a post section, onto which a crown is secured. The base body is divided, so that the post elements surrounding the post section can be removed from the remaining base body comprising the threaded part.

WO 00/32134 describes a two-part implant which is designed so that the areas intended for bone apposition exhibit a scalloped appearance, including both convex, and concave patterns to follow the naturally occurring bone morphology. Thus, the disclosed implants provide attachment possibilities for both bones and soft tissue, thereby effecting both hard- and soft-tissue preservation.

Currently there are different techniques possible which are primarily used for producing dental implants made of ceramic materials for example: forming of a ceramic body, e.g. by injection moulding or isopressing, or grinding out of a densely sintered like HIP (High Isostatic Pressing) ceramic blank.

Injection moulding has the advantages that a serial production is possible and that almost all designs of a dental implant are possible. However, the design of a prototype injection mould is difficult and/or expensive and therefore the variability of this method, i.e. the number of different implant designs which can be produced economically is quite low. Since in most cases a postproduction is needed, the material is not sintered densely enough at the injection moulding step, leading to defects in the material and, thus, to a high rejection rate.

Grinding out of a densely sintered HIP cylindrical blank has the advantage that it is very precise due to the CAD/CAM-technique and thus a high variability in the design of the dental implant is possible. Since the material is already densely sintered, the rejection rate is very low. However, it is an expensive method and due to the hardness of the material it is difficult to grind indentations into the implant body, such as it is needed, for example, for an internal connection having securing means. Further, grinding the material leads to so-called mini-cracks (rifts), which might have an influence on the quality and stability of the implant. Thus, with this method it is nearly impossible to provide an internal connection having securing means (antirotation), as well as to provide a screwed joint.

The two-part ceramic dental implant designs known from the prior art suffer among others from the fact that so far they do not provide a design suitable to be produced by an affordable technique known in the art and that no suitable durable connection between the two-parts of the dental implant is provided.

In the two-part ceramic implants of the prior art, the anchoring part and abutment are connected either via a flat-to-flat connection or via a tube-in-tube connection. These types of connection suffer from the disadvantage that the connection between the anchoring part and the abutment is not absolutely tight. Micro-gaps can occur which may form the entry point for bacterial colonization of the implant, subsequently leading to bacterial infections of the surrounding gingiva. Furthermore, these kinds of connections are prone to micromovements which can reduce the stability of the two-part implant leading to breakage of the abutment and/or the anchoring part.

The present invention addresses the above-mentioned shortcomings and further problems of the prior art by providing a two-part dental implant (10) having a stable tapered (conical) connection between an anchoring part (200) and an abutment (100). The combination of an abutment having an outward cone and an anchoring part having an inward cone leads to a tight connection between anchoring part (200) and abutment (100) without micro-gaps. Said connection prevents the intrusion of bacteria and prevents micromovements leading to breakage of the anchoring part and/or the abutment.

### SUMMARY OF THE INVENTION

In a first aspect the present invention relates to an anchoring part (200) of a two-part dental implant (10), wherein the anchoring part (200) comprises the following sections positioned in the following order from the distal end to the proximal end of the anchoring part (200): an inward cone (210), an inward lock against rotation (220), a guiding section (230), and an anchoring section (235) having an external thread for anchoring the anchoring part (200) into a bone.

In a second aspect the present invention relates to an abutment (100) of a two-part dental implant (10), wherein the abutment (100) comprises the following sections positioned in the following order from the distal to the proximal end of the abutment (100): a prosthetic head (105), an outward cone (110), an outward lock against rotation (120), and a guiding pin (130).

In a third aspect the present invention relates to an inserting pole (300) for screwing an anchoring part (200) according to the first aspect into a bone, wherein the inserting pole (300) comprises: an inserting geometry (305), an outward lock against rotation (320), and a guiding pin (330).

### DETAILED DESCRIPTION OF THE INVENTION

### Definitions

Before the present invention is described in detail below, it is to be understood that this invention is not limited to the particular methodology, protocols and reagents described herein as these may vary. It is also to be understood that the terminology used herein is for the purpose of describing particular embodiments only, and is not intended to limit the scope of the present invention which will be limited only by the appended claims. Unless defined otherwise, all technical and scientific terms used herein have the same meanings as commonly understood by one of ordinary skill in the art.

Preferably, the terms used herein are defined as described in "A multilingual glossary of biotechnological terms: (IUPAC Recommendations)", Leuenberger, H.G.W, Nagel, B. and Kölbl, H. eds. (1995), Helvetica Chimica Acta, CH-4010 Basel, Switzerland).

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step.

Several documents are cited throughout the text of this specification. Each of the documents cited herein (including all patents, patent applications, scientific publications, manufacturer's specifications, instructions, GenBank Accession Number sequence submissions etc.), whether supra or infra, is hereby incorporated by reference in its entirety. Nothing herein is to be construed as an admission that the invention is not entitled to antedate such disclosure by virtue of prior invention.

The expression "proximal" as used when referring to the dental implant (10) of the present invention shall refer to that end of the dental implant (10) which is closer to the bone into which the dental implant is inserted. The opposite expression "distal" refers to that end of the dental implant which is farther away from the bone into which the dental implant is inserted. Thus, the proximal end of the anchoring part (200) is to be buried in the bone, whereas the distal end of the anchoring part (200) is to face the oral cavity, when the anchoring part (200) is inserted into the bone. The proximal end of the abutment (100) is to be inserted into the anchoring part (200), whereas the distal end of the abutment (100) shall face the oral cavity and a crown or a superstructure may be placed upon the distal end of the abutment (100).

The term "cone" as it is used in the present application encompasses oblique cones, right cones, and circular cones. Furthermore, the term "cone" shall encompass non-truncated cones, truncated cones, and frustums of a cone. In preferred embodiments, the term "cone" refers to a frustum of a right circular cone.

The expression "flush with" as used in the present application shall characterize a tight connection between two parts wherein said two parts fit so well to each other that no gaps or microgaps can be detected in the contact area between these two parts when they are brought in close contact.

The term "biocompatible ceramics" refers to ceramic materials, which are inert or substantially inert against the environment within the mouth and are non-toxic. Preferably the term refers to ceramics comprising ceramic materials selected from the group consisting of zirconium dioxide, aluminium oxide, yttrium oxide, hafnium oxide, silicon oxide, magnesium oxide, cerium oxide, other metal oxides, and mixtures thereof. The pure or mixed ceramic materials can have various crystal forms including, for example, monoclinic, tetragonal, trigonal, hexagonal etc. as can be found, e.g. in ruby and sapphire. Preferably, the ceramic material consists of zirconium dioxide, hafnium oxide, yttrium oxide, aluminium oxide and small amounts of other metal oxides. In preferred embodiments, the zirconium dioxide ceramic is selected from the group consisting of zirconium dioxide ceramic according to ISO 13356, alumina toughened zirconia (ATZ), zirconia toughened alumina (ZTA), so called "yttrium-stabilized zirconium" (see e.g. EP 0 218 853 A1 and EP 0 624 360 A1) and Y-TZP-A (yttrium oxide stabilized tetragonal zirconia polycristals doped with alumina).

The term "biocompatible synthetic material" refers to an organic polymer having an E-module >2,000 N/mm², preferably > 2,500 N/mm², preferably > 3,000 N/mm², more preferably > 3,500 N/mm². The biocompatible synthetic material is preferably inert or substantially inert against the environment within the mouth and is non-toxic. Preferred synthetic materials are selected from a group consisting of polycarbonate (PC), polyamide (PA), polyimide (PI), polyetheretherketone (PEEK), polyphenylenesulfide (PPSE), epoxide resin (EP), unsaturated polyester (UP), phenol resin (PF), melamine resin (MF), cyanate ester (CA), polytetrafluoroethylene (PTFE) and mixtures thereof. A particular preferred material is PEEK (e.g. PEEK-Optima^{®}, which can be purchased from Invibio, Lancashire, U.K.). To improve the mechanical properties of biocompatible synthetic material, it can be reinforced by introducing other materials, especially fibres from glass, coal, aramide, or metal fibres. The resulting compounds are especially suitable synthetic materials due to their hardness. Examples for especially suitable fibres are aramide fibres (AF), coal fibres (CF) and glass fibres (GF). These can be used individually or as mixtures. Preferably, these fibres are embedded in one or more of the following duroplast or thermoplast matrices: epoxide, polyester, phenol, cyanate ester, polyamide, polyimide, polyetheretherketone, polyphenylenesulfide. A number of such compounds are known in the art and comprise especially the group of glass fibre reinforced synthetic materials (GFK), carbon fibre reinforced synthetic material (CFK) and aramide fibre reinforced material (AF) as well as mixtures thereof. All of the above are also comprised in the term "biocompatible synthetic material".

### Embodiments of the Invention

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In a preferred embodiment of the dental implant (10) according to the present invention the outward cone (110) and the inward cone (210) have an angle θ of between 3 to 60 degrees, for example 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 degrees. Preferably the angle θ is between 10 to 55 degrees, more preferably between 20 to 50 degrees, even more preferably between 30 to 45 degrees, and is most preferably about 40 degrees. Said angle θ is defined as the angle between the longitudinal axis of the dental implant (10) and a surface line of the outward cone (110) or the inward cone (210). Said surface line of a cone is often referred to as the slant height of a cone. A cone may also be defined with reference to its apex angle. The apex angle is the maximum angle between two surface lines. Thus, the apex angle is 2 0, wherein θ is defined as above.

In preferred embodiments of the dental implant (10) according to the present invention the outward cone (110) has a height of between 0.3 to 2.5 mm and the inward cone (210) has a depth of between 0.3 to 2.5 mm. Thus, the height or the depth may be for example 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, or 2.5 mm.

In preferred embodiments, the outward cone (110) and the inward cone (210) have an identical geometry such as an identical angel θ and/or identical dimensions such as an identical height/depth.

In particularly preferred embodiments of the present invention, the cone (110) is flush with the cone (210), when the abutment (100) is inserted into the anchoring part (200).

In a preferred embodiment of the dental implant (10) according to the present invention the outward lock against rotation (120) and the inward lock against rotation (220) have an elliptical or a polygonal cross-section. As will be understood by the skilled person, the shape of the outward lock against rotation (120) of the abutment (100) is determined by the shape of the inward lock against rotation (220) of the anchoring part (200). In embodiments, wherein the outward lock against rotation (120) and the inward lock against rotation (220) have a polygonal shape, said polygonal shape has n faces, whereas "n" can be any number between 3 and 50, e.g. 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50, preferably said polygonal shape has 3, 4, 5, 6, 7, 8, 9 or 10 faces, more preferably 4, 5 or 6 faces or any range defined by the various numbers. In especially preferred embodiments, the polygonal shape has 4 faces, i.e. the polygonal cross-section is a tetragonal cross-section, e.g. a tetragonal cross-section in the form of a rectangle or a parallelogram. In preferred embodiments the ratio of the side lengths in said rectangle or in said parallelogram ranges from 1:1 to 1:7. For example, said ratio of the side lengths may be 1:1, 1:1.5, 1:2, 1:2.5, 1:3, 1:3.5, 1:4, 1:4.5, 1:5, 1:5.5, 1:6, 1:6.5 or 1:7 or any range defined by any combination of the various ratios. In embodiments, wherein the outward lock against rotation (120) and the inward lock against rotation (220) have an elliptical cross-section, the ratio of the minor axis of the ellipse to the major axis of the ellipse is between 1:1.1 and 1:7. For example, said ratio of the minor axis of the ellipse to the major axis of the ellipse may be 1:1.1, 1:1.5, 1:2, 1:2.5, 1:3, 1:3.5, 1:4, 1:4.5, 1:5, 1:5.5, 1:6, 1:6.5 or 1:7 or any range defined by any combination of the various ratios.

In a preferred embodiment of the dental implant (10) according to the present invention the inward lock against rotation (220) has a depth of between 0.5 and 4.5 mm, for example 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, or 4.5 mm. In preferred embodiments the depth of the inward lock against rotation (220) is between 1.5 and 4.0 mm, more preferred between 2.5 and 3.5 mm, and most preferably is about 3.0 mm. In preferred embodiments, the outward lock against rotation (120) has a height of between 0.2 and 3.5 mm, for example 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, or 3.5 mm. In preferred embodiments the height of the outward lock against rotation (120) is between 0.5 and 3.0 mm, more preferred between 1.5 and 2.5 mm, and most preferably is about 2.0 mm. To allow easier insertion of the abutment (100) into the anchoring part (200), the outward lock against rotation (120) should be smaller than the inward lock against rotation (220). In particular, the height of the outward lock against rotation (120) should be at least 0.1 mm, at least 0.2 mm, at least 0.3 mm, at least 0.4 mm, at least 0.5 mm, at least 0.6 mm, at least 0.7 mm, at least 0.8 mm, at least 0.9 mm or at least 1.0 mm less than the depth of the inward lock against rotation (220). Likewise, the area of the cross-section of the outward lock against rotation (120) should be slightly smaller than the area of the cross-section of the inward lock against rotation (220).

Without wishing to be bound by any theory, the inventors believe that choosing an elliptical geometry for the inward and outward lock against rotation (220, 120) provides at least the following advantage as compared to polygonal geometries. A polygonal geometry of the lock against rotation is difficult to grind in the dental practice using CAD/CAM-technique. An elliptical geometry is easier to grind. Thus, the abutment (100) can be grinded in the dental practice. This allows fitting the abutment individually into the patient's dentition.

In preferred embodiments of the dental implant (10) according to the present invention the guiding section (230) has a depth of between 1.0 to 7.0 mm and the guiding pin (130) has a height of between 1.0 to 7.0 mm, for example 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, or 7.0 mm. In preferred embodiments, the height of the guiding pin (130) is smaller than the depth of the guiding section (230); for example the height of the guiding pin (130) may be smaller by 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, or 3.5 mm than the depth of the guiding section (230).

In preferred embodiments of the dental implant (10) according to the present invention the guiding section (230) and the guiding pin (130) each have a circular cross-section with a diameter of between 0.5 to 4.0 mm, for example 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4.0 mm. In preferred embodiments, the diameter of the guiding pin (130) is smaller than the diameter of the guiding section (230); for example the diameter of the guiding pin (130) may be smaller by 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0 mm than the diameter of the guiding section (230).

In preferred embodiments of the dental implant (10) according to the present invention, the anchoring part (200) and the abutment (100) are independently from each other made from one or more of the following materials: biocompatible ceramics and a biocompatible synthetic material.

In some embodiments, the abutment (100) is made from two or more different materials. In a preferred embodiment of the present invention, the part of the abutment being in contact with the anchoring part (200) is made from a biocompatible synthetic material such as those recited above, preferably PEEK, and the remaining part of the abutment is made from biocompatible ceramics, preferably from a ceramic material comprising zirconia. Thus, in preferred embodiments, the guiding pin (130), the outward lock against rotation (120) and/or the outward cone (110) are made from a biocompatible synthetic material. The remaining part of the abutment comprising the prosthetic head (105), and optionally comprising the groove (115) and the intersection (125) may be made from biocompatible ceramics and may have the form of a cap which can be placed on the biocompatible synthetic material part of the abutment. The different parts of the abutment may be fixed to each other by means of an adhesive (also termed cement). Suitable adhesives for carrying out the present invention comprise without limitation zinc phosphate cements, carboxylate cements, glass ionomer cements, hybrid cements, composite cements, cyanacrylate cements, and polyacrylate adhesives. Without wishing to be bound by a specific theory, the inventors believe that choosing a biocompatible synthetic material for that part of the abutment being in contact with the anchoring part (200) will enhance the contact between anchoring part (200) and abutment (100), since biocompatible synthetic materials generally are ductile. The above-mentioned embodiment, wherein part of the abutment being in contact with the anchoring part (200) is made of a biocompatible synthetic material, is particularly preferred when the anchoring part (200) is made of biocompatible ceramics, since such biocompatible ceramics are generally non-ductile.

In preferred embodiments, the guiding pin (130) and the guiding section (230) are essentially free from threaded parts or are entirely free from threaded parts.

In one preferred embodiment of the dental implant (10) according to the present invention a surface area of the outer threaded part of the anchoring section (235) has a micro roughness of between 2 micron and 50 micron, e.g. 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 38, 39, 40, 41, 42, 43, 44, 45, 46, 47, 48, 49 or 50, preferably between 4 micron and 20 micron to facilitate the ingrowth of osteoblasts and the stable attachment of bone tissue to the implant. It is well known in the art how to measure surface roughness, for example with an alphastep 250 profilometer. The micro roughness provides an excellent contact surface for osteoblasts, which attach to the dental implant and faster "osseo-integration", which is a prerequisite for permanent adherence to the contacting bone surface. Therefore a suitable micro-roughness of the implant surface provides a mechanical interlocking between the bone and the implant. Preferably the surface area having a micro-roughness of between 2 to 50 micron covers at least 20 %, more preferably at least 30 %, more preferably at least 40 %, more preferably at least 50 %, more preferably at least 60 %, more preferably at least 70 %, more preferably at least 80 %, more preferably at least 90 % of the surface area of the outer threaded part. More preferably the surface area having a micro-roughness of between 4 to 20 micron covers at least 20 %, more preferably at least 30 %, more preferably at least 40 %, more preferably at least 50 %, more preferably at least 60 %, more preferably at least 70 %, more preferably at least 80 %, more preferably at least 90 % of the surface area of the outer threaded part. Said surface area having above indicated micro-roughness may be a continuous surface area or a discontinuous surface area of the outer threaded part.

The required surface roughness can be achieved by a variety of art known methods including without limitation blasting with aluminium oxide after the implant has been sintered or the roughness can already be achieved through the design of the mould used for forming the ceramic green body during injection moulding or isopressing or the roughness can be achieved through coating with a biocompatible material e.g. ceramic or any biomaterial which could be suitable to achieve a better implant to bone contact or by surface manipulation through a laser technique. In preferred embodiments, the above-indicated micro-roughness is obtained by covering at least part of the outer threaded part with a Bonit® coating (available from DOT GmbH, Rostock, Germany).

In another embodiment of the dental implant (10) according to the present invention the outer threaded part of the anchoring section (235) has a diameter and length suitable to be inserted into the mandibular or maxillary bone. Ideally all roots of teeth have been removed prior to drilling the hole into which the dental implant is placed. However, it is also possible to drill a hole into a bone still comprising all or parts of a natural root. The dental implant is ultimately stabilized and securely attached to the bone by the ingrowth of osteoblasts into the dental implant. In addition an outer threaded part of the anchoring section (235) is provided which serves the purpose of mechanical stabilizing the dental implant in the bone.

The threaded part can have any art known form. The thread can be either right-handed or left-handed and can have a wide variety of pitches and thread shapes. In preferred embodiments the pitches and thread shapes of the threaded part are formed as described in international patent application WO 2007/039206, the content of which is incorporated herewith by reference in its entirety.

In one embodiment of the dental implant according to the present invention the prosthetic head (105) of the abutment (100) has a width and/or length suitable to avoid a post-processing step. Most prior art implants have a voluminous prosthetic head, which has to be further processed after implantation to allow attachment of, e.g. the crown or superstructure. Post-processing steps, e.g. grinding of the prosthetic head, is often accompanied with an impairment of the prosthetic head and, therefore, avoiding this step provides a further advantage to the dental implants of the present invention. While the teeth between two patients do not markedly vary in their length there is a large variation laterally between similar teeth of two persons. Thus, a post-processing step is always necessary in cases when the dental implant has a width, which given the respective lateral space available will not allow the attachment of, e.g. a crown or superstructure. No post-processing steps are needed, when the width of the prosthetic head is selected in such that it is appropriate for the respective tooth space to be closed. Thus, in a preferred embodiment the width of the prosthetic head (105) of the abutment is within the range of 2.0 to 11.0 mm, e.g. 2, 3, 4, 5, 6, 7, 8, 9, or 10 mm, or is within any range defined by two of these numbers, more preferably in the range of 2.5 to 8.0 mm, even more preferably in the range of 3.0 to 7.0 mm and most preferably in the range of about 3.5 to about 5.8 mm, preferably at the distal end of the abutment, wherein the diameter might vary over the length. Preferably, the prosthetic head has a length of between 2 and 10 mm, e.g. 1, 2, 3, 4, 5, 6, 7, 8, 9, or 10 mm, preferably of between 3 and 5 mm, preferably of between 2 and 4 mm, measured from the contact region to the coronal region of said abutment.

The prosthetic head (105) of the abutment (100) according to the present invention may have a conical shape or rectangular shape. If the shape of the prosthetic head (105) is conical, the angle of this cone preferably is between 0 and 25 degrees, such as 1, 2, 3, 4, 5, 6, 7, 8, 9, 10, 11, 12, 13, 14, 15, 16, 17, 18, 19, 20, 21, 22, 23, 24, or 25 degrees, and more preferably is about 15 degrees. Said angle of the cone of the prosthetic head (105) is defined as the angle between the longitudinal axis of the abutment (100) and a surface line of the cone of the prosthetic head (105). In some embodiments, a groove (115) separates the prosthetic head (105) and the outward cone (110). If a groove (115) is present, it typically has a dimension of between 0.2 and 2.0 mm, for example 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or 2.0 mm. Preferably the dimension of the groove (115) is 0.5 mm. In some embodiments, an intersection (125) is present between groove (115) and outward cone (110). The intersection (125) may be designed to have a wave-form surrounding the abutment (100) in order to follow the bone morphology.

In a preferred embodiment of the two-part dental implant according to the present invention, the abutment (100) and the anchoring part (200) are connected to each other with an adhesive (also termed cement). A large number of suitable adhesives are known in the art of dentistry suitable to connect two or more parts of an implant. Preferably an adhesive suitable in the present invention is selected from the group of adhesives comprising without limitation: zinc phosphate cements, carboxylate cements, glass ionomer cements, hybrid cements, composite cements, cyanacrylate cements, and polyacrylate adhesives. In preferred embodiments of the present invention, the guiding pin (130) is shorter than the guiding section (230) and/or the guiding pin (130) has a smaller diameter than the guiding section (230) so that upon insertion of the abutment (100) into the anchoring part (200) a cavity is formed between the guiding pin (130) and the guiding section (230). Said cavity is intended to accommodate an excess amount of adhesive. In preferred embodiments of the present invention, the outward lock against rotation (120) is shorter than the inward lock against rotation (220) (i.e. the height of the outward lock against rotation (120) is less than the depth of the inward lock against rotation (220)) and/or the area of the cross-section of the outward lock against rotation (120) is smaller than the area of the cross-section of the inward lock against rotation (220) so that upon insertion of the abutment (100) into the anchoring part (200) a cavity is formed between the outward lock against rotation (120) and the inward lock against rotation (220). Said cavity may contribute to accommodating an excess amount of adhesive.

In a third aspect, the present invention relates to an inserting pole (300) comprising an inserting geometry (305), an outward lock against rotation (320), and a guiding pin (330). The inserting pole (300) is designed for screwing an anchoring part (200) of the invention into a bone. The shape of the outward lock against rotation (320) is determined by the shape of the corresponding inward lock against rotation (220) of the anchoring part (200). The guiding pin (330) is designed to fit into the guiding section (230) so that the stability of the arrangement of inserting pole (300) and anchoring part (200) is enhanced, when the inserting pole (300) is inserted into the anchoring part (200). In preferred embodiments, the guiding pin (330) and the guiding section (230) are essentially free from threaded parts or are entirely free from threaded parts. In preferred embodiments, the inserting pole (300) may be provided with a collar or ring, e.g. a silicone collar or a silicone ring, so that the inserting pole (300) may be friction-fitted to the anchoring part (200). Said collar or ring may be placed around at least part of the outward lock against rotation (320) or more preferably around at least part of the guiding pin (330). Keeping the inserting pole (300) friction-fitted to the anchoring part (200) may facilitate the step of inserting the anchoring part (200) into the bone of a patient.

The inserting geometry (305) preferably has a polygonal shape so that a "spanner-like" tool or a "wrench-like" tool can engage said inserting geometry (305). The terms "spanner" and "wrench" are used interchangeably throughout this specification. Preferably, the polygonal shape of the inserting geometry (305) has n faces, whereas "n" can be any number between 2 and 50, e.g. 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50, preferably said polygonal shape has 2, 3, 4, 5, 6, 7, or 8 faces, more preferably 4, 5 or 6 faces or any range defined by the various numbers. In especially preferred embodiments, said polygonal shape has 5 faces.

In preferred embodiments, the inserting pole (300), additionally comprises a through boring (340) crossing the inserting pole (300) from the guiding pin (330) to the inserting geometry (305). Preferably, said through boring (340) crosses the inserting pole (300) parallel to its longitudinal axis or essentially parallel to its longitudinal axis. In more preferred embodiments, said through boring (340) crosses the inserting pole (300) along its longitudinal axis or essentially along its longitudinal axis. The through boring (340) may be used to feed a sterilizing gas into the anchoring part (200). In preferred embodiments, said sterilizing gas is ETO (ethylene oxide).

In preferred embodiments, the inserting pole (300) of the invention is made of one or more of the following materials: titanium, a titanium alloy, a biocompatible synthetic material. In preferred embodiments the biocompatible synthetic material is PEEK (polyetheretherketone). In preferred embodiments, the biocompatible synthetic material is a polymer reinforced with glass fibres and/or a polymer reinforced with carbon fibres. Without wishing to be bound by any theory, the inventors believe that using an inserting pole (300) and a "wrench-like" tool made of polymers reinforced with glass fibres and/or carbon fibres reduces the risk of causing abrasion, in particular metal abrasion, when the anchoring part (200) is screwed into the bone using the inserting pole (300) and a "wrench-like" tool.

### BRIEF DESCRIPTION OF THE DRAWINGS

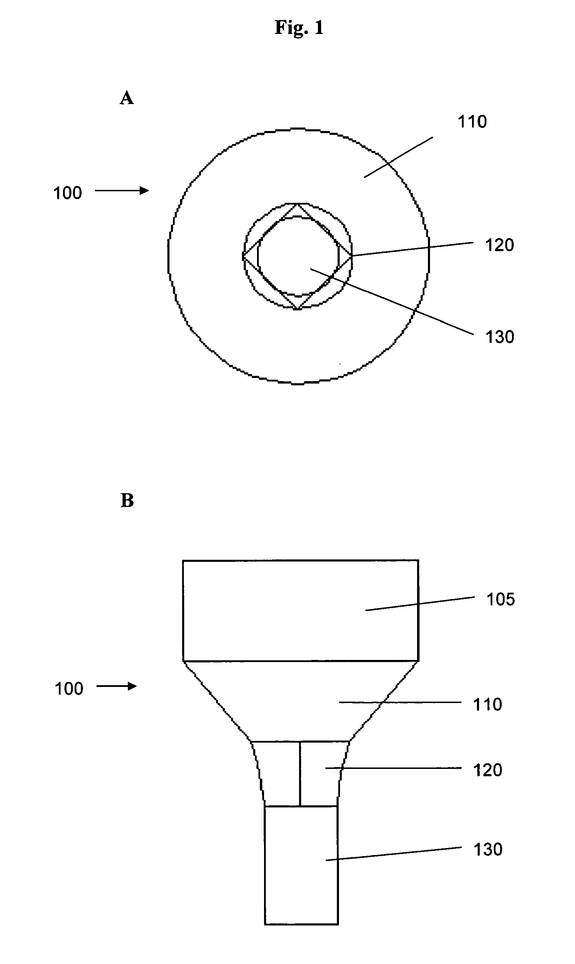

Fig. 1 shows an embodiment of an abutment (100) of the two-part dental implant according to the present invention. Fig. 1A is a bottom view of the abutment. Fig. 1B is a side view of the abutment.

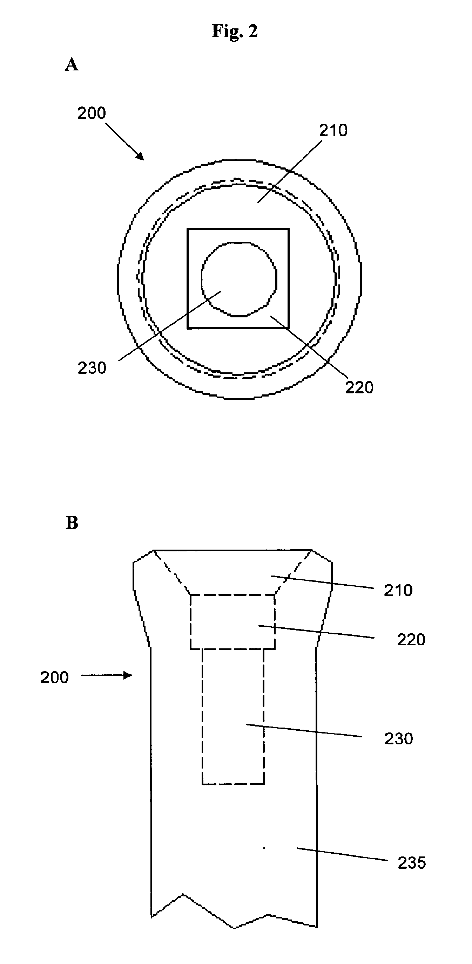

Fig. 2 shows an embodiment of an anchoring part (200) of the two-part dental implant according to the present invention. Fig. 2A is a top view of the anchoring part. Fig. 2B is a side view of the anchoring part. The inside geometry of the anchoring part is shown in dashed lines.

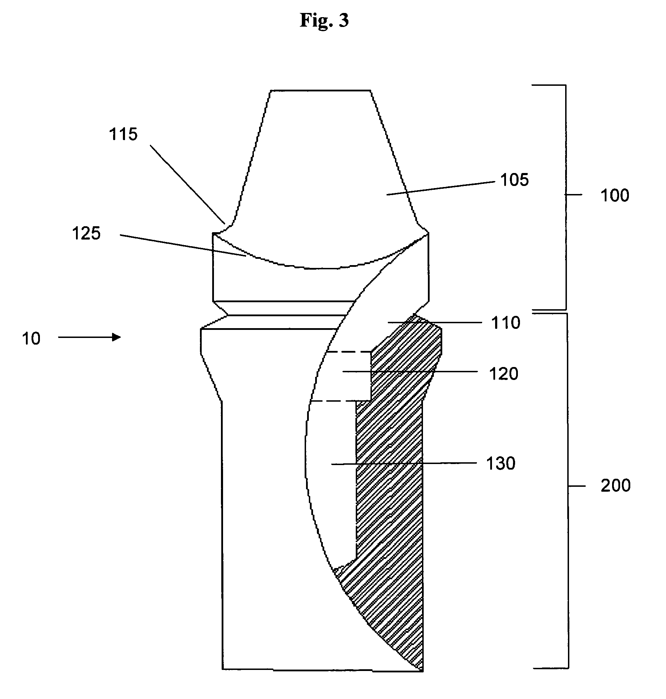

Fig. 3 shows a two-part dental implant (10) according to the present invention consisting of an abutment (100) and an anchoring part (200).

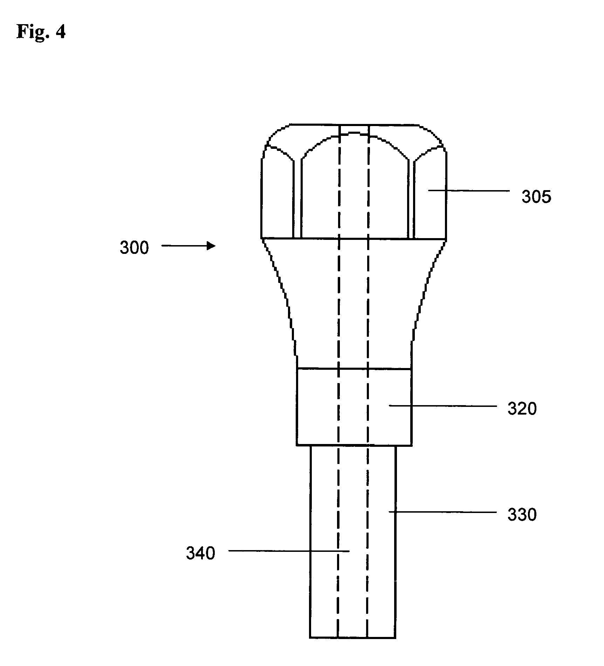

Fig. 4 shows an embodiment of the inserting pole (300) according to the present invention in side view. A through boring (340) is indicated with dashed lines.

### LISTING OF REFERENCE NUMERALS

- 10: two-part dental implant
- 100: abutment
- 105: prosthetic head
- 110: outward cone
- 115: groove
- 120: outward lock against rotation
- 125: intersection
- 130: guiding pin
- 200: anchoring part
- 210: inward cone
- 220: inward lock against rotation
- 230: guiding section
- 235: anchoring section
- 300: inserting pole
- 305: inserting geometry
- 320: outward lock against rotation
- 330: guiding pin
- 340: through boring

## Claims

1. An anchoring part (200) of a two-part dental implant (10),
wherein the anchoring part (200) comprises the following sections positioned in the following order from the distal end to the proximal end of the anchoring part (200):
- an inward cone (210),
- an inward lock against rotation (220),
- a guiding section (230), and
- an anchoring section (235) having an external thread for anchoring the anchoring part (200) into a bone.

2. The anchoring part (200) according to claim 1, wherein the cone (210) has an angle of between 3 and 60 degrees.

3. The anchoring part (200) according to claim 1 or 2, wherein the cone (210) has a depth of between 0.3 and 2.5 mm.

4. The anchoring part (200) according to any one of claims 1 to 3, wherein the inward lock against rotation (220) has an elliptical or a polygonal cross-section.

5. The anchoring part (200) according to claim 4, wherein the polygonal cross-section is a tetragonal cross-section.

6. The anchoring part (200) according to claim 5, wherein the tetragonal cross-section is a rectangle or a parallelogram, wherein the ratio of the side lengths in the rectangle or in the parallelogram is between 1:1 and 1:7.

7. The anchoring part (200) according to claim 4, wherein the inward lock against rotation (220) has an elliptical cross-section and wherein the ratio of the minor axis of the ellipse to the major axis of the ellipse is between 1:1.1 and 1:7.

8. The anchoring part (200) according to anyone of claims 1 to 7, wherein the inward lock against rotation (220) has a depth of between 0.5 and 4.5 mm.

9. The anchoring part (200) according to anyone of claims 1 to 8, wherein the guiding section (230) has a depth of between 1.0 to 7.0 mm.

10. The anchoring part (200) according to anyone of claims 1 to 9, wherein the guiding section (230) has a circular cross-section with a diameter of between 0.5 to 4.0 mm.

11. The anchoring part (200) according to anyone of claims 1 to 10 being made of one or more of the following materials: biocompatible ceramics or a biocompatible synthetic material.

12. An abutment (100) of a two-part dental implant (10),
wherein the abutment (100) comprises the following sections positioned in the following order from the distal to the proximal end of the abutment (100):
- a prosthetic head (105),
- an outward cone (110),
- an outward lock against rotation (120), and
- a guiding pin (130).

13. The abutment (100) according to claim 12, wherein upon insertion of the abutment (100) into the anchoring part (200) according to any one of claims 1 to 11 the cone (110) is flush with the cone (210).

14. The abutment (100) according to claim 12 or 13, wherein upon insertion of the abutment (100) into the anchoring part (200) according to any one of claims 1 to 11 the outward lock against rotation (120) is flush with the inward lock against rotation (220).

15. The abutment (100) according to any one of claims 12 to 14, wherein the cone (110) has an angle of between 3 and 60 degrees.

16. The abutment (100) according to any one of claims 12 to 15, wherein the cone (110) has a height of between 0.3 and 2.5 mm.

17. The abutment (100) according to any one of claims 12 to 16, wherein the outward lock against rotation (120) has an elliptical or a polygonal cross-section.

18. The abutment (100) according to claim 17, wherein the polygonal cross-section is a tetragonal cross-section.

19. The abutment (100) according to claim 18, wherein the tetragonal cross-section is a rectangle or a parallelogram, wherein the ratio of the side lengths in the rectangle or in the parallelogram is between 1:1 and 1:7.

20. The abutment (100) according to claim 17, wherein the outward lock against rotation (120) has an elliptical cross-section and wherein the ratio of the minor axis of the ellipse to the major axis of the ellipse is between 1:1.1 and 1:7.

21. The abutment (100) according to anyone of claims 12 to 20, wherein the outward lock against rotation (120) has a height of between 0.2 and 3.5 mm.

22. The abutment (100) according to anyone of claims 12 to 21, wherein the guiding pin (130) has a height of between 1.0 to 7.0 mm.

23. The abutment (100) according to anyone of claims 12 to 22, wherein the guiding pin (130) has a circular cross-section with a diameter of between 0.5 to 4.0 mm.

24. The abutment (100) according to anyone of claims 12 to 23 being made of one or more of the following materials: biocompatible ceramics or a biocompatible synthetic material.

25. The abutment (100) according to anyone of claims 12 to 24, wherein the prosthetic head (105) has a conical shape or a rectangular shape.

26. The abutment (100) according to anyone of claims 12 to 25, wherein the prosthetic head (105) is separated from the outward cone (110) by a groove (115).

27. The abutment (100) according to anyone of claims 12 to 26, wherein the part of the abutment (100) being in contact with the anchoring part (200) is made from a biocompatible synthetic material and the remaining part of the abutment is made from biocompatible ceramics.

28. An inserting pole (300) for screwing an anchoring part (200) according to any one of claims 1 to 11 into a bone, wherein the inserting pole (300) comprises:
- an inserting geometry (305),
- an outward lock against rotation (320), and
- a guiding pin (330)

29. The inserting pole (300) according to claim 28, additionally comprising a through boring (340) crossing the inserting pole (300) from the guiding pin (330) to the inserting geometry (305).

30. The inserting pole (300) according to claim 28 or 29 being made of one or more of the following materials: titanium, a titanium alloy, or a biocompatible synthetic material.
